# EUROPÄISCHE PATENTSCHRIFT

(11) **EP 0 440 040 B1**
(45) Veröffentlichungstag und Bekanntmachung des Hinweises auf die Patenterteilung: **25.01.1995**
(21) Anmeldenummer: 91100484.4
(22) Anmeldetag: 17.01.1991
(51) Int. Cl.: B29C 33/22, B29D 30/06

(54) **Profilsegment für eine Reifenvulkanisierform**
Profiled segment for tyre-vulcanising mould
Segment profilé pour moule de vulcanisation de pneus

(30) Priorität: 31.01.1990 DE 4002708
(43) Veröffentlichungstag der Anmeldung: 07.08.1991
(73) Patentinhaber: Maschinenbau Herbert GmbH & Co., D-36088 Hünfeld (DE)
(72) Erfinder: Jachowsky, Norbert, W-6418 Hünfeld (DE)
(74) Vertreter: Missling, Arne, Dipl.-Ing.

(56) Entgegenhaltungen:
- EP-A- 0 145 138
- DE-A- 2 210 099
- DE-A- 3 039 222
- WORLD PATENTS INDEX Derwent Publications Ltd.,London, GB; AN 7691423&JP-A-51 119 776 (BRIDGESTONE TYRE K.K.)

## Beschreibung

Die Erfindung bezieht sich auf ein Profilsegment für eine Reifenvulkanisierform nach dem Oberbegriff des Anspruches 1.

Bei der Reifenherstellung wird üblicherweise eine Reifenvulkanisierform verwendet, welche aus mehreren Profilsegmenten aufgebaut ist. Um den Reifen in die Form einlegen bzw. nach dem Vulkanisiervorgang entnehmen zu können, sind die einzelnen Profilsegmente zueinander bewegbar. Es sind Vulkanisierformen bekannt, bei welchen eine Teilung in die einzelnen Profilsegmente mittig, bezogen auf den Reifen erfolgt, die Vulkanisierform kann jedoch auch in radialer Richtung in einzelne Profilsegmente unterteilt sein. Eine derartige Reifenvulkanisierform ist beispielsweise aus der DE-OS 3631533 bekannt.

Bei der Reifenherstellung ergibt sich die Notwendigkeit, die in der Reifenvulkanisierform befindlichen Gase während des Einformens des Reifenrohlings abzuführen. Im Gegensatz zu üblichen Gießformen ergibt sich hierbei die Schwierigkeit, daß der Reifen insbesondere die Lauffläche stark profiliert ausgebildet ist, so daß die Reifenvulkanisierform durch die zur Herstellung derartiger Nuten und Schlitze erforderlichen Stege und Lamellen in einzelne Kammern unterteilt ist. Somit sammeln sich wahrend des Einformens die Gase in diesen Kammern und müssen aus jeder dieser Kammern abgeführt werden.

Aus dem Stand der Technik ist es bekannt, dieses Entlüftungsproblem dadurch zu lösen, daß die Profilsegmente mit einzelnen Bohrungen ausgestattet sind. Durch die Bohrungen können zwar die Gase abgeführt werden, es tritt jedoch gleichzeitig der Effekt auf, daß die Gummimischung ebenfalls in die Bohrung eintritt und diese zumindest zum Teil durchströmt, so daß an dem fertigen Produkt zapfenartige Ansätze vorhanden sind, welche durch das in den Bohrungen befindliche Material gebildet werden. Infolgedessen müssen die fertigen Reifen nachbearbeitet werden, um diese Ansätze oder Gumminippel zu entfernen. Hierzu ist ein zusätzlicher Fertigungsaufwand erforderlich, weiterhin bilden diese Ansätze oder Nippel ein zusätzliches Abfallmaterial, welches vermieden werden sollte.

Um diesem Mangel abzuhelfen, ist in einer bekannten Anordnung gemaß DE-OS 22 10 099, von welcher der Oberbegriff des Anspruchs 1 ausgeht, vorgesehen, zwischen dem Forminnenraum und einem außerhalb gelegenen Sammelraum, der an eine Vakuumquelle anschließbar ist, ein Druckgefälle aufzubauen in der weise, daß in die Verbindungskanäle nur wenig oder keine Gummimasse einfließen kann. Allerdings sind in den Verbindungskanälen zwischen dem Forminnenraum und dem Sammelraum spezielle Düsen erforderlich, die auch aufeinander abgestimmt sein müssen. Dadurch wird die Anordnung teuer.

Aus der DE-OS 30 39 222 ist es auch bereit bekannt, die Teilsegmente durch Trennung eines einstückig hergestellten Profilsegmentes zu gewinnen.

Der Erfindung liegt die Aufgabe zugrunde, Profilsegmente für eine Reifenvulkanisierform zu schaffen, welche bei einfachem Aufbau und einfacher Herstellbarkeit eine sichere Gasabfuhr während des Vulkanisiervorganges gewährleisten.

Die Aufgabe wird erfindungsgemäß dadurch gelost, daß die Trennlinien die zu entlüftenden Bereiche der Reifenvulkanisierform durchschneiden.

Das erfindungsgemäße Profilsegment zeichnet sich durch eine Reihe erheblicher Vorteile aus. Da die Trennlinien die jeweils zu entlüftenden Bereiche der Reifenvulkanisierform durchschneiden, ist sichergestellt, daß sämtliche abzuführenden Gase abgeleitet werden können. Die Gefahr, daß sich einzelne Kammern in nicht erwünschter und unkontrollierter Weise mit Gasen füllen, wird somit vollständig ausgeschlossen. Die Unterteilung des Profilsegments in mehrere Teilsegmente schafft die Möglichkeit, genug geeignete Entlüftungsspalten auszubilden. Weiterhin können die einzelnen Teilsegmente ohne große Schwierigkeiten voneinander getrennt werden, so daß der Zustand der Trennlinien nachgeprüft bzw. der sich bei einem aneinanderliegen benachbarter Segmente bildende Spalt gereinigt werden kann. Auf Verbindungsbohrungen kann man nun verzichten.

Erfindungsgemäß ergibt sich weiterhin der wesentliche Vorteil, daß die Breite der an den Trennlinien gebildeten Spalte in einfachster Weise so eingestellt werden kann, daß zwar die Gase austreten, jedoch keine Gummimasse in die Spalte eindringen kann. Es wird somit die Erzeugung von Nippeln oder Rippen vollständig vermieden. Hierdurch entfällt jede Art der Nacharbeitung, wie sie bei Reifenvulkanisierformen erforderlich sein kann. Weiterhin entspricht auch der optische Eindruck des fertigen Produkts höchsten Anforderungen.

In einer besonders günstigen Weiterbildung der Erfindung ist vorgesehen, daß die Teilsegmente in einer Halterung aufgenommen und gegeneinander festgelegt sind. Die Festlegung kann durch gegenseitiges Verspannen der Teilsegmente erfolgen, es ist jedoch auch möglich, daß die Halterung lediglich eine Art Rahmen bildet, in welchem die einzelnen Teilsegmente so aufgenommen sind, daß im Bereich der Trennlinien weiterhin ein Spalt vorliegt. In beiden Fällen wird eine sichere Positionierung der Teilsegmente erreicht, so daß sich diese während des Vulkanisierungsvorgangs nicht relativ zueinander bewegen können.

Um zu erreichen, daß die einzelnen Teilsegmente exakt und nicht bewegbar zueinander festgelegt sind, ist es weiterhin günstig, wenn die Halterung mit einer Spanneinrichtung zum gegenseitigen Verspannen der Teilsegmente, im wesentlichen senkrecht zur Trennlinie, versehen ist. Dadurch wird insbesondere verhindert, daß sich die Teilsegmente während des Vulkanisiervorganges so zueinander bewegen, daß eine Vergrößerung des durch die Trennlinien gebildeten Spaltes auftritt, welche dazu führen könnte, daß Gummimaterial in den Spalt eindringt. Gleichzeitig ist es möglich, durch Lösen der Spanneinrichtung die einzelnen Teilsegmente voneinander zu lösen, um beispielsweise den Spalt im Bereich der Trennlinien zu reinigen. Dies erweist sich besonders dann als günstig, wenn ein zusätzliches Trennmittel vor dem Vulkanisiervorgang auf die Reifenvulkanisierform aufgebracht wird, welches zu einer Verstopfung oder Verschmutzung der Spalte und damit zu einer ungenügenden Gasabfuhr führen könnte.

Um weiterhin sicherzustellen, daß während der gegenseitigen Verspannung der Teilsegmente durch eine zunehmende Spannkraft auch die Spalte zwischen den Teilsegmenten kleiner werden, ist es besonders günstig, wenn die Trennlinie in einem Winkel kleiner als 45° zur Verspannungsebene angeordnet ist. Würde die Trennlinie parallel zur Verspannungsebene verlaufen, so würde die aufgebrachte Spannkraft sich praktisch nicht auf die Breite der Spalte auswirken. In einer besonders günstigen Ausgestaltung ist vorgesehen, daß die Trennlinie im wesentlichen senkrecht zur Spannrichtung verläuft. Da dies nicht immer realisiert werden kann, da das Reifenprofil, bedingt insbesondere durch die Anordnung der Lamellen, an anderen Stellen eine zusätzliche Lüftung erfordert, verläuft die Trennlinie üblicherweise wellenförmig oder zick-zack-förmig.

Hinsichtlich des erfindungsgemäßen Verfahrens wird die der Erfindung zugrundeliegenden Aufgabe dadurch gelöst, daß das Profilsegment zunächst einstückig ausgebildet und nachfolgend entlang der Trennlinie in die Teilsegmente unterteilt wird. Die einstückige Ausbildung kann beispielweise durch einen Gießvorgang erfolgen.

Die Unterteilung des somit hergestellten Profilsegmentes in die einzelnen Teilsegmente erfolgt erfindungsgemäß mit einer sehr geringen Schnittbreite, um zu verhindern, daß während der Unterteilung eine Veränderung der Profilform oder ähnliches auftritt. Bevorzugte Verfahren zum Unterteilen des Profilsegments sind beispielsweise ein Funkenerosionsverfahren unter Verwendung einer Draht-Erosionsmaschine. Bei der Schnittführung ist es somit möglich, sowohl zu berücksichtigen, welche Bereiche des Reifenprofils einer besonderen Gasabfuhr bedürfen, als auch die Schnittlinie so zu legen, daß die einzelnen Teilsegmente in einfacher Weise relativ zueinander bewegt, d.h. voneinander getrennt bzw. gegeneinander gedrückt werden können.

In Abhängigkeit von der Profilausgestaltung, der Form der Reifenvulkanisierform sowie sonstiger Betriebsparameter ist es möglich, das Profilsegment durch mehrere Trennlinien in mehrere Teilsegmente zu unterteilen, wobei die jeweiligen Trennlinien im wesentlichen in gleicher Richtung zueinander verlaufen, d.h. im wesentlichen parallel zueinander sind.

Im folgenden wird die Erfindung anhand eines Ausführungsbeispiels in Verbindung mit der Zeichnung beschrieben. Dabei zeigt:
- Fig. 1: eine schematische Draufsicht auf die Innenseite eines erfindungsgemäßen Profilsegments, wobei die Darstellung teils in der Abwicklung gezeigt ist, und
- Fig. 2: eine vereinfachte Seitenansicht einer Halterung mit einem Profilsegment.

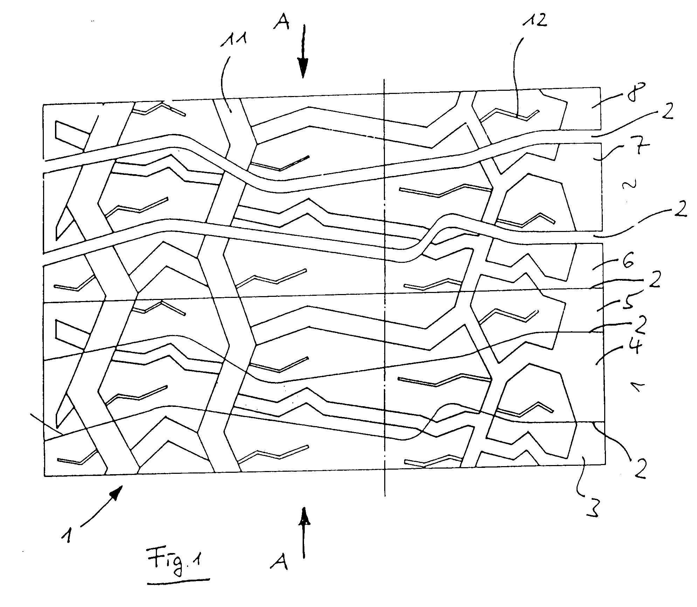

In Fig. 1 ist eine Ansicht auf die profilierte Seite eines Profilsegments 1 dargestellt, welches einen Teil einer Reifenvulkanisierform bildet. Die einzelnen Profilsegmente bilden hierbei den umfangsseitigen Bereich einer Reifenform und dienen insbesondere dazu, die Laufflächenstruktur des Reifens zu erzeugen. Die Art der Anordnung, Einspannung und Betätigung der einzelnen Profilsegmente ist aus dem Stand der Technik bekannt, beispielweise aus der DE-OS 3631533, so daß auf eine detaillierte Beschreibung an dieser Stelle verzichtet werden kann.

Um die Darstellung des erfindungsgemäßen Profilsegmentes zu vereinfachen, wurde dieses in Fig. 1 zum Teil in der Abwicklung dargestellt, d.h. die seitlichen Bereiche bzw. die oberen und unteren Bereiche wurden in die Bildebene transferiert.

Aus der Darstellung gemäß Fig. 1 ergibt sich, daß das Profilsegment mehrere Profilstege 11 und Lamellen 12 aufweist, welche eine Negativform für das erzeugende Reifenprofil bilden.

Die Fig. 1 zeigt weiterhin mehrere Trennlinien 2, welche im wesentlichen in radialer Richtung, bezogen auf den zu erzeugenden Reifen, durch das Profilsegment 1 verlaufen, so daß dieses in einzelne Teilsegmente 3 bis 8 unterteilt ist. Die Anordung und Ausbildung der einzelnen Trennlinien 2 ist so gewählt, daß diese jeweils durch die zu entlüftenden Bereiche des Profilsegments 1 geführt werden. Demgemäß ist die in Fig. 1 unterste Trennlinie 2 wellenförmig ausgebildet, ebenso wie die darüber angeordnet nächste Trennlinie 2. Die mittlere Trennlinie erstreckt im wesentlichen in Form einer Geraden, da die durch die einzelnen Lamellen 12 bzw. Profilstege 11 gebildeten Teil-Kammern bei dieser Form der Trennlinie besonders gut zu entlüften sind.

Die Fig. 1 zeigt in der unteren Bildhälfte einen Zustand, in welchem die einzelnen Teilsegmente 3, 4, 5 gegeneinander verspannt sind. Demgemäß sind im Bereich der Trennlinien 2 nur sehr schmale Spalte ausgebildet, welche ausreichend breit sind, um Gase abzuführen, welche jedoch eine Breite aufweisen, die zu gering ist, um ein Eintreten der zu vulkanisierenden Gummimasse zu ermöglichen. In der oberen Bildhälfte gemäß Fig. 1 sind die Teilsegmente 6, 7 und 8 jeweils voneinander getrennt, damit der im Bereich der Trennlinie 2 gebildete Spalt besonders deutlich sichtbar ist.

Weiterhin ist in Fig. 1 durch die Pfeile A - A die Verspannungsrichtung oder Verschieberichtung dargestellt, in welche die einzelnen Teilsegmente 3 bis 8 gegeneinander verspannt oder gedrückt werden, um den in der unteren Bildhälfte von Fig. 1 gezeigten betriebsfertigen Zustand zu bewirken.

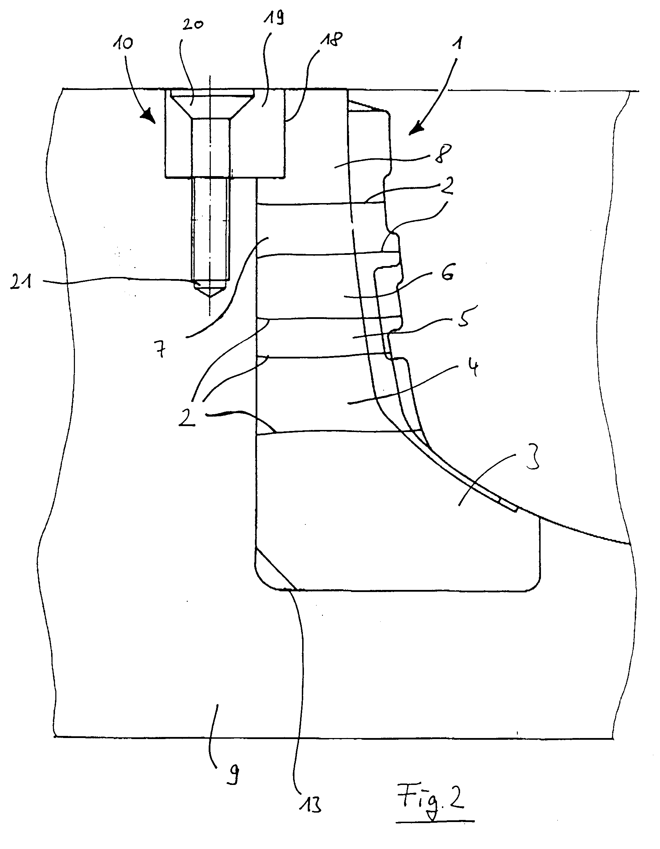

Aus Fig. 2 ist ersichtlich, daß die Formschale 9 mit einer Ausnehmung 13 versehen ist, welche nutförmig ausgestaltet ist und so dimensioniert ist, daß die einzelnen Teilsegmente 3 bis 8 aufgenommen und sicher positioniert werden können. Die in der Fig. 2 in Seitenansicht gezeigten Teilsegmente sind mit einer Nut 18 versehen, in welche ein Spannkörper 19 einbringbar ist. Entsprechend der Ausgestaltung der Reifenvulkanisierform ist der Spannkörper 19 beispielsweise ringförmig. Mittels Schrauben 20, welche in Gewindebohrungen 21 der Formschale 9 eingebracht sind, kann der Spannkörper 19 gegen die Halterung 9 bzw. die Segmente verspannt werden. Durch Lösen der Schrauben 20 ist ein schnelles und einfaches Entnehmen der Teilsegmente 3 bis 8 möglich, beispielweise, um die Bereiche der Trennlinien 2 zu reinigen.

In der Fig. 2 wurde darauf verzichtet, die rückwärtigen Luftabführkanäle oder ähnliches darzustellen, es ergibt sich für den Fachmann aufgrund seines Fachwissens, daß, in Abhängigkeit von der Form der einzelnen Profilsegmente, zusätzliche, beispielsweise im Trennbereich zwischen den einzelnen Profilsegmenten, anzuordnen sind.

Die Erfindung ist nicht auf das gezeigte Ausführungsbeispiel beschränkt, vielmehr ergeben sich für den Fachmann im Rahmen der Erfindung vielfältige Abwandlungs- und Modifikationsmöglichkeiten.

## Patentansprüche

1. Profilsegment für eine Reifenvulkanisierform, wobei das Profilsegment (1) entlang zumindest einer Trennlinie (2) in zumindest zwei Teilsegmente (3 bis 8) unterteilt ist und die Trennlinie (2) im wesentlichen radial, bezogen auf die Reifenform, verläuft, dadurch gekennzeichnet, daß die Trennlinie (2) die zu entlüftenden Bereiche der Reifenvulkanisierform durchschneidet.

2. Profilsegment nach Anspruch 1, dadurch gekennzeichnet, daß die Teilsegmente (3 bis 8) in einer Halterung (9) aufgenommen und gegeneinander festgelegt sind.

3. Profilsegment nach einem der Ansprüche 1 oder 2, dadurch gekennzeichnet, daß die Teilsegmente (3 bis 8) entlang der Trennlinie (2) einen Abstand zueinander aufweisen, welche so bemessen ist, daß Gase durchleitbar sind, das Eintreten der Gummimasse aber verhindert wird.

4. Profilsegment nach einem der Ansprüche 2 oder 3, dadurch gekennzeichnet, daß die Halterung (9) mit einer Spanneinrichtung (10) zum gegenseitigen Verspannen der Teilsegmente (3 bis 8) im wesentlichen senkrecht zur Trennlinie (2) versehen ist.

5. Profilsegment nach Anspruch 4, dadurch gekennzeichnet, daß die Trennlinie (2) in einem Winkel kleiner als 45° zur Verspannungsebene angeordnet ist.

6. Profilsegment nach einem der Ansprüche 1 bis 5, dadurch gekennzeichnet, daß die Reifenvulkanisierform mittig in die Profilsegmente (1) unterteilt ist.

7. Profilsegment nach einem der Ansprüche 1 bis 5, dadurch gekennzeichnet, daß die Reifenvulkanisierform radial in die Profilsegmente (1) unterteilt ist.

## Claims

1. A profiled segment for a tyre vulcanising mould, wherein the profiled segment (1) is divided into at least two subsegments (3 to 8) along at least one dividing line (2) and the dividing line (2) extends substantially radially in relation to the tyre mould, characterised in that the dividing line (2) cuts through the regions of the tyre vulcanising mould to be deaerated.

2. A profiled segment according to claim 1, characterised in that the sub-segments (3 to 8) are held and fastened together in a mounting (9).

3. A profiled segment according to either one of claims 1 and 2, characterised in that the distance between the subsegments (3 to 8) along the dividing line (2) is such that gasses can pass through, but the entry of the rubber mass is prevented.

4. A profiled segment according to either one of claims 2 and 3, characterised in that the mounting (9) is provided with a clamping device (10) for fastening the sub-segments (3 to 8) together substantially perpendicularly to the dividing line (2).

5. A profiled segment according to claim 4, characterised in that the dividing line (2) is arranged at an angle of less than 45° to the clamping plane.

6. A profiled segment according to any one of claims 1 to 5, characterised in that the tyre vulcanising mould is centrally divided into the profiled segments (1).

7. A profiled segment according to any one of claims 1 to 5, characterised in that the tyre vulcanising mould is radially divided into the profiled segments (1).

## Revendications

1. Segment profilé pour un moule de vulcanisation de pneumatiques, ce segment profilé (1) étant divisé en au moins deux segments élémentaires (3 à 8) le long d'au moins une ligne de séparation (2) et cette ligne de séparation (2) ayant une direction essentiellement radiale par rapport au moule pour pneumatiques, caractérisé en ce que la ligne de séparation (2) recoupe les zones à dégazer du moule de vulcanisation de pneumatiques.

2. Segment profilé suivant la revendication 1, caractérisé en ce que les segments élémentaires (3 à 8) sont repris dans une fixation (9) et sont fixés les uns contre les autres.

3. Segment profilé suivant la revendication 1 ou la revendication 2, caractérisé en ce que les segments élémentaires (3 à 8) présentent, le long de la ligne de séparation (2), les uns par rapport aux autres, un écart qui a une dimension telle que les gaz peuvent le traverser, mais que l'entrée de la masse de caoutchouc est empêchée.

4. Segment profilé suivant la revendication 2 ou la revendication 3, caractérisé en ce que la fixation (9) est munie d'un dispositif de serrage (10) pour serrer l'un contre l'autre les segments élémentaires (3 à 8), essentiellement perpendiculairement à la ligne de séparation (2).

5. Segment profilé suivant la revendication 4, caractérisé en ce que la ligne de séparation (2) est disposée dans un angle plus petit que 45°, par rapport au plan de serrage.

6. Segment profilé suivant l'une quelconque des revendications 1 à 5, caractérisé en ce que le moule de vulcanisation de pneumatiques est divisé en son milieu en segments profilés (1).

7. Segment profilé suivant l'une quelconque des revendications 1 à 5, caractérisé en ce que le moule de vulcanisation de pneumatiques est divisé radialement en segments profilés (1).
